# DEMANDE DE BREVET EUROPEEN

(11) **EP 4 730 583 A1**
(43) Date de publication de la demande: **22.04.2026**
(21) Numéro de dépôt: 25209698.7
(22) Date de dépôt: 20.10.2025
(51) Int. Cl.: H02H 3/04, H02H 3/33, H02H 3/05

(54) **DISPOSITIF DE PROTECTION ÉLECTRIQUE, ENSEMBLE DE DISTRIBUTION ET TABLEAU ÉLECTRIQUE ASSOCIÉS**

(30) Priorité: 21.10.2024 FR 2411465
(71) Demandeur: SCHNEIDER ELECTRIC INDUSTRIES SAS, 92500 Rueil-Malmaison (FR)
(72) Inventeur: CORONA, Fabien, 92500 RUEIL MALMAISON (FR)
(74) Mandataire: Lavoix

(57) **Abrégé**

Ce dispositif de protection (300) électrique, configuré pour relier électriquement une charge électrique (M) à une source de puissance (S) électrique, comprend des bornes d'arrivée (302), des bornes de départ (304), et des moyens de coupure (310) actionnés par un actionneur (324) bistable. Un microcontrôleur (320) est prévu pour générer un signal de défaut (S320), qui déclenche l'actionneur, et un signal de sortie (S321), qui est différent du signal de défaut. Le dispositif de protection comprend un circuit de supervision (500), qui est interposé entre le microcontrôleur (320) et l'actionneur (324) et qui inclut un oscillateur (510) configuré pour générer un signal périodique (S510). Le circuit de supervision est configuré pour générer un signal de déclenchement (S324) lorsque, alternativement, le signal de sortie (S321) du microcontrôleur (320) est absent, ou le signal périodique (S510) de l'oscillateur (510) est absent, ou lorsqu'un signal de défaut (S320) est émis.

## Description

La présente invention concerne un dispositif de protection électrique, un ensemble de protection comprenant un tel dispositif de protection électrique, ainsi qu'un tableau électrique comprenant un tel dispositif de protection ou un tel ensemble de protection

On s'intéresse aux dispositifs de protection comprenant des contacts séparables, qui sont mobiles sous la commande d'un actionneur. US-2007/165342-A1, US-10 126 337-B2 et US-2002/014010-A1 décrivent chacun des dispositifs de protection connus. On connait les dispositifs dans lesquels l'actionneur est monostable et comprend une bobine à manque de tension, c'est-à-dire que la bobine demande à être mise sous tension pour refermer les contacts. Lorsque la tension est interrompue, les contacts s'ouvrent naturellement. Autrement dit, le dispositif de protection est par défaut dans une configuration ouverte, c'est-à-dire qu'en cas de dysfonctionnement, le dispositif de protection revient dans la configuration assurant le plus de sécurité aux utilisateurs. Or un tel actionneur consomme de l'énergie en continu, générant de la chaleur, ce qui n'est pas souhaitable.

C'est à ces problèmes qu'entend plus particulièrement remédier l'invention, en proposant un dispositif de protection économe en énergie tout en étant sécurisé.

À cet effet, l'invention concerne un dispositif de protection électrique, configuré pour relier électriquement une charge électrique à une source de puissance électrique, le dispositif de protection comprenant :
- au moins deux bornes d'arrivée, qui sont configurées pour être électriquement connectées à une phase de la source de puissance et éventuellement à un neutre de la source de puissance,
- des bornes de départ, qui sont configurées pour être reliées à la charge électrique, chaque borne de départ étant associée à une borne d'arrivée respective,
- des bornes d'alimentation, qui sont différentes des bornes d'arrivées et qui sont configurées pour être connectées à un bus d'alimentation en énergie électrique de fonctionnement, l'énergie électrique de fonctionnement provenant possiblement de la source de puissance,
- des moyens de coupure électromécaniques comprenant des contacts séparables, qui sont déplaçables, au moyen d'un actionneur, entre une position fermée, dans laquelle chaque borne d'arrivée est électriquement reliée à la borne de départ associée, le dispositif de protection étant dans une configuration fermée, et une position ouverte, dans laquelle le passage d'un courant électrique entre la borne d'arrivée et la borne de départ associée est empêché, le dispositif de protection étant dans une configuration ouverte, l'actionneur étant configuré pour faire passer les moyens de coupure électromécanique de la position fermée à la position ouverte lorsque l'actionneur reçoit un signal de déclenchement,
- des moyens de détection, qui sont configurés pour mesurer des grandeurs électriques aux bornes de départ et pour détecter au moins un défaut électrique,
- un microcontrôleur, qui est configuré pour générer un signal de défaut lorsque les moyens de détection détectent un premier défaut électrique,
- une première unité d'alimentation, qui est configurée pour recevoir de l'énergie électrique en provenance du bus d'alimentation et pour alimenter le microcontrôleur en énergie électrique de fonctionnement,
dans lequel :
- l'actionneur est un actionneur bistable,
- le dispositif de protection comprend :
   - un circuit de supervision, qui est interposé entre le microcontrôleur et l'actionneur, le circuit de supervision incluant un oscillateur configuré pour générer un signal périodique, et
   - une deuxième unité d'alimentation, qui est différente de la première unité d'alimentation et qui est configurée pour recevoir de l'énergie électrique en provenance du bus d'alimentation et pour alimenter le circuit de supervision en énergie électrique,
- le microcontrôleur est configuré pour générer un signal de sortie, qui est différent du signal de défaut,
- le circuit de supervision ménage :
   - une première porte d'entrée, qui est une porte logique configurée pour recevoir le signal de sortie du microcontrôleur,
   - une deuxième porte d'entrée, qui est une porte logique configurée pour recevoir le signal périodique de l'oscillateur,
   - une troisième porte d'entrée, qui est une porte logique configurée pour recevoir le signal de défaut du microcontrôleur,
   - une porte de sortie principale, qui est une porte logique reliée à l'actionneur,
- le circuit de supervision étant configuré pour générer un signal de déclenchement par la porte de sortie principale lorsque, alternativement :
   - la première porte d'entrée ne reçoit pas le signal de sortie du microcontrôleur, ou
   - la deuxième porte d'entrée ne reçoit pas le signal périodique de l'oscillateur, ou
   - la troisième porte d'entrée reçoit un signal de défaut.
- le circuit de supervision est configuré pour ne pas générer le signal de déclenchement par la porte de sortie principale tant que, conjointement :
   - la première porte d'entrée reçoit le signal de sortie du microcontrôleur, et
   - la deuxième porte d'entrée reçoit le signal périodique de l'oscillateur, et
   - la troisième porte d'entrée ne reçoit aucun signal de défaut.

Grâce à l'invention, la présence du dispositif de supervision offre une sécurité active, c'est-à-dire force le déclenchement de l'actionneur à la fois en cas de dysfonctionnement du microcontrôleur et lorsque le dispositif de supervision, en particulier l'oscillateur, dysfonctionne. De nombreux modes de défaillances sont ainsi couverts. Par exemple, lorsque l'une des unités d'alimentation défaille, l'actionneur est déclenché. Lorsque le microcontrôleur dysfonctionne, l'actionneur est déclenché. Lorsque le dispositif de supervision dysfonctionne, l'actionneur est déclenché. L'actionneur bistable, quant à lui, ne consomme de l'énergie électrique que lorsque l'actionneur bistable commute d'une position à l'autre. L'actionneur bistable est ainsi particulièrement économe en énergie et permet ainsi de limiter l'échauffement du dispositif de protection.

Selon des aspects avantageux mais non obligatoires de l'invention, un tel dispositif de protection électrique peut incorporer une ou plusieurs des caractéristiques suivantes prises isolément ou selon toute combinaison techniquement admissible :
- Le circuit de supervision comprend :
   - un premier circuit logique, qui ménage la première porte d'entrée et la deuxième porte d'entrée et qui implémente une porte logique ET, la porte logique ET combinant le signal de sortie du microcontrôleur avec le signal périodique de l'oscillateur, de manière à générer un signal de contrôle,
   - un deuxième circuit logique, qui ménage la troisième entrée logique et la porte de sortie principale, le deuxième circuit logique implémentant une porte logique OU, la porte logique OU combinant le signal de contrôle de la porte logique ET avec le signal de défaut du microcontrôleur, de manière à générer le signal de déclenchement, qui est transmis de la porte de sortie principale à l'actionneur de manière à faire commuter l'actionneur,
   dans lequel :
- le signal de sortie est configuré pour neutraliser le signal périodique, de sorte que :
   - lorsque l'oscillateur génère le signal périodique et, conjointement, le microcontrôleur génère le signal de sortie, alors le signal de contrôle est un signal de maintien, adapté pour laisser l'actionneur en position fermée,
   - lorsque le microcontrôleur ne génère plus le signal de sortie, le signal de contrôle est un signal de déclenchement.
- Le microcontrôleur comprend une entrée de réception du signal périodique de l'oscillateur, le microcontrôleur étant configuré pour, lorsque le signal périodique n'est pas détecté pendant un intervalle de temps prédéterminé, générer le signal de défaut.
- Le circuit de supervision est réalisé par un circuit électronique sans logiciel.
- L'oscillateur est un circuit intégré NE555 ou équivalent.

L'invention concerne aussi un ensemble de distribution configuré pour distribuer de l'énergie électrique provenant de la source de puissance à au moins une charge électrique, dans lequel l'ensemble de distribution comprend un dispositif de distribution, qui comprend :
- un bus de puissance, qui comprend plusieurs barres conductrices :
   - qui incluent au moins une barre de phase et éventuellement une barre de neutre, la barre de neutre éventuelle étant associée au neutre de la source de puissance, chaque barre de phase étant respectivement associée à une phase de la source de puissance,
   - qui s'étendent s'étendant parallèlement entre elles selon un axe principal du dispositif de distribution et qui sont alignées selon un axe de hauteur qui est orthogonal à l'axe principal,
- un bus d'alimentation, qui est distinct du bus de puissance,
l'ensemble de distribution comprend également un exemplaire du dispositif de protection tel que décrit précédemment, le dispositif de protection étant monté au reste du dispositif de distribution de sorte que :
- chaque borne d'arrivée est électriquement connectée à une barre conductrice correspondante,
- la première unité d'alimentation et la deuxième unité d'alimentation sont électriquement connectées au bus d'alimentation.

Selon des aspects avantageux mais non obligatoires de l'invention, un tel dispositif de distribution peut incorporer une ou plusieurs des caractéristiques suivantes prises isolément ou selon toute combinaison techniquement admissible :
- L'ensemble de de distribution inclut, en outre, un boitier principal, qui comprend :
   - des bornes d'entrées, qui sont configurées pour être relié à chaque phase et au éventuellement au neutre de la source de puissance,
   - des bornes de sorties, qui sont chacune reliées à la barre conductrice, de neutre ou de phase, correspondante, chaque borne de sortie étant associée à une barre conductrice respective et à une borne d'entrée respective,
   - une sortie d'alimentation, qui est connectée au bus d'alimentation, le boitier principal étant configuré pour fournir de l'énergie électrique de fonctionnement à chaque dispositif de coupure par l'intermédiaire du bus d'alimentation.
- Le boitier principal comprend un dispositif de coupure générale, qui est configurée pour, conjointement :
   - déconnecter électriquement chaque borne de sortie de la borne d'entrée correspondante, et
   - déconnecter électriquement la sortie d'alimentation de la source de puissance.
- Le dispositif de coupure générale présente un comportement d'interrupteur monostable.

L'invention concerne aussi un tableau électrique comprenant :
- un coffre, délimitant une enceinte et présentant un fond,
- l'ensemble de distribution tel que décrit précédemment,
dans lequel l'ensemble de distribution est fixé sur le fond du boitier.

L'invention sera mieux comprise, et d'autres avantages de celle-ci apparaîtront plus clairement à la lumière de la description qui va suivre, d'un mode de réalisation d'un dispositif de protection électrique, d'un ensemble de distribution et d'un tableau électrique, conformes à son principe, donnée uniquement à titre d'exemple et faite en référence aux dessins annexés, dans lesquels :
- [Fig 1] la figure 1 est une vue en perspective partiellement éclatée un tableau électrique conforme à l'invention, le tableau électrique comprenant un ensemble de distribution avec au moins un dispositif de protection, aux-aussi conformes à l'invention ;

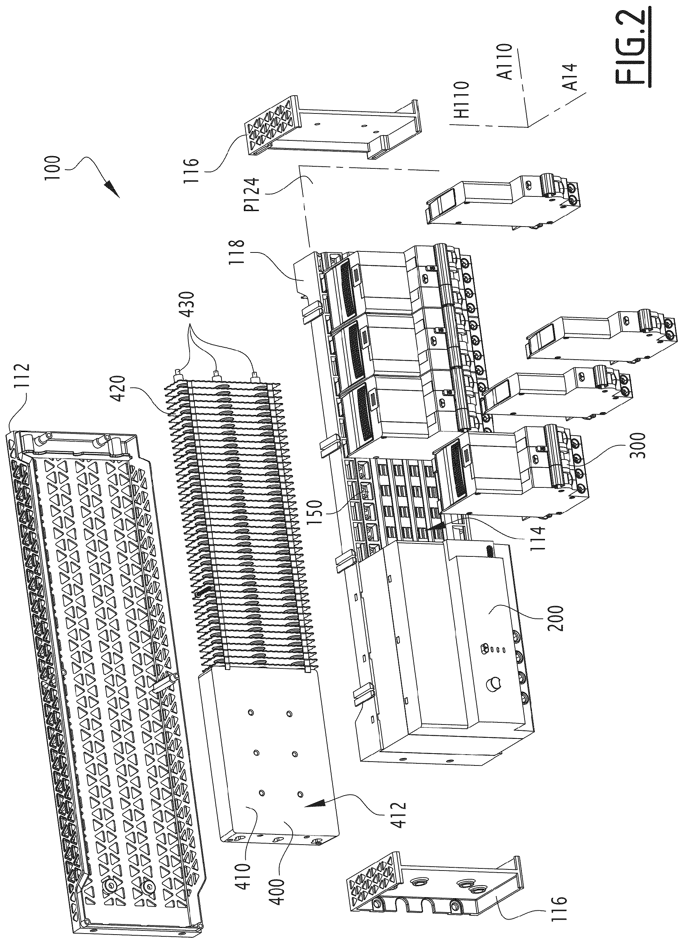

- [Fig 2] la figure 2 est une vue en perspective partiellement éclatée de l'Ensemble de distribution de la figure 1 ;
- [Fig 3] la figure 3 représente respectivement, sur deux inserts a) et b), une vue en perspective de l'ensemble de distribution de la figure 1, certaines pièces étant cachées, et une vue en perspective d'un bus de transfert de l'ensemble de distribution,
- [Fig 4] la figure 4 est une vue en perspective partiellement éclatée de l'ensemble de distribution de la figure 1, certaines pièces étant cachées ;
- [Fig 5] la figure 5 est une représentation schématique de l'ensemble de distribution de la figure 1,
- [Fig 6] la figure 6 est une représentation schématique du dispositif de protection de la figure 1,
- [Fig 7] la figure 7 est une représentation schématique d'un premier circuit électronique du dispositif de protection de la figure 1 ;
- [Fig 8] la figure 8 est une représentation schématique d'un deuxième circuit électronique du dispositif de protection de la figure 1, et
- [Fig 9] la figure 9 est une représentation schématique d'un troisième circuit électronique du dispositif de protection de la figure 1.

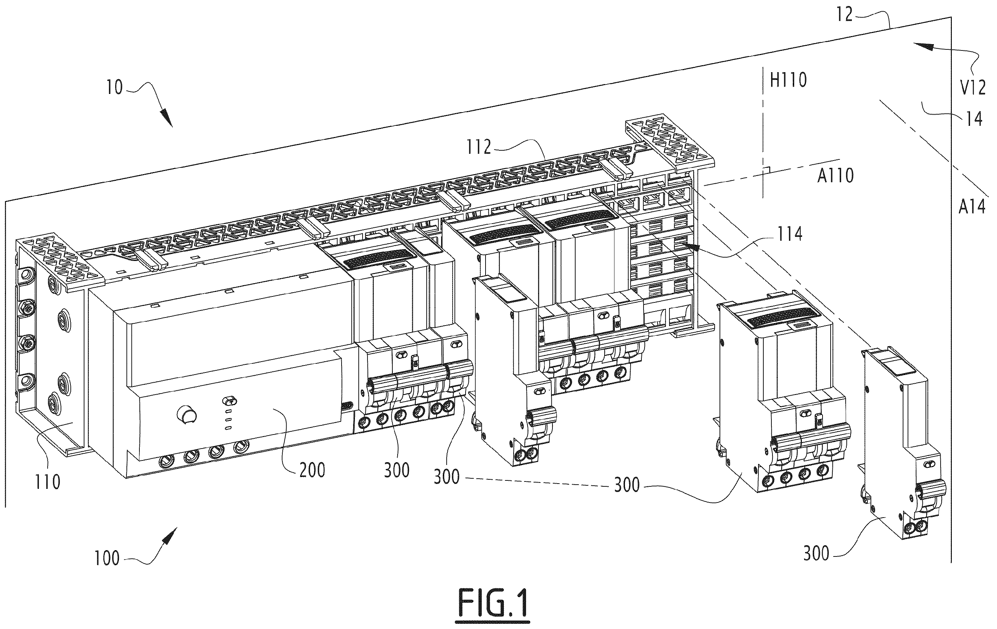

Un tableau électrique 10, conforme à l'invention, est représenté à la figure 1. Le tableau électrique 10 comprend un coffre 12, qui délimite une enceinte V12 et qui présente un fond 14. Le fond 14 s'étant globalement dans un plan orthogonal à un axe de profondeur A14. L'enceinte V12 est avantageusement refermée par une porte, qui n'est pas représentée.

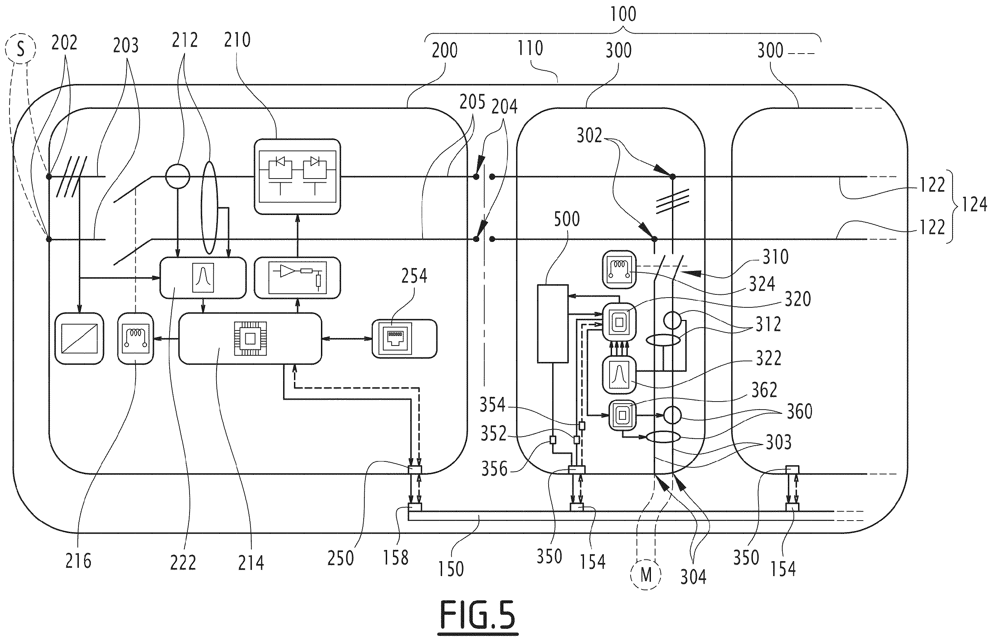

Le tableau électrique 10 comprend un ensemble de distribution 100. L'ensemble de distribution 100 est fixé sur le fond 14 du boitier 12. 1. L'ensemble de distribution 100 est configuré pour distribuer de l'énergie électrique provenant d'une source de puissance S à au moins une charge électrique M, par exemple un moteur. La source de puissance S et la charge électrique M, qui sont représentées schématiquement à la figure 5, ne font pas partie de l'invention mais servent à en expliquer le contexte de fonctionnement. La source de puissance S comprend un neutre et au moins une phase. Dans l'exemple illustré, la source de puissance S est une source triphasée, comprenant un neutre et trois phases. En variante non illustrée, la source de puissance S est monophasée, comprenant un neutre et une seule phase. Selon une autre variante, la source de puissance comprend trois phases, et pas de neutre.

L'ensemble de distribution 100 comprend avantageusement un dispositif de distribution 110, par lequel l'ensemble de distribution 100 est fixé sur le fond 14, un boitier principal 200, qui est assemblé au dispositif de distribution 110, de préférence de manière réversible, et au moins un dispositif de protection300, ici sept dispositifs de protection, chaque dispositif de protection300 étant assemblé au dispositif de distribution 110 de manière réversible, dans une position montée du dispositif de protection 300. Les dispositifs de protections 300 sont ici des boitiers de départ, les principes de l'invention étant bien entendu transposables à des dispositifs de protection d'un type différent. Il est ainsi possible de remplacer, au besoin, le boitier principal 200 en cas de dysfonctionnement du boitier principal 200, tout en conservant les autres éléments de l'ensemble de distribution 100, dispositif de distribution 110 et boitier(s) de départ 300, ce qui est économique. De même, il est possible de remplacer, au besoin, un ou plusieurs des dispositifs de protection 300, par exemple en cas de dysfonctionnement, tout en conservant les autres éléments, dispositif de distribution 110 et boitier principal 200, ce qui est économique.

Le dispositif de distribution 110 présente une forme allongée, qui s'étend selon un axe principal A110. Lorsque l'ensemble de distribution 100 est dans une configuration normale de fonctionnement, l'axe principal A110 est parallèle au fond 14, autrement dit orthogonal à l'axe de profondeur A14. De préférence, l'axe principal A110 est horizontal, comme illustré à la figure 1. On définit un axe de hauteur H110 comme étant un axe orthogonal à la fois à l'axe de profondeur A14 et à l'axe principal A110. La description est faite en regarde de l'orientation des dives éléments tels que représentés sur les figures, sachant qu'il peut en être autrement dans la réalité.

Dans l'exemple de la figure 1, le boitier principal 200 est situé sur la gauche de l'ensemble de distribution 100, les dispositifs de protection 300 étant situé sur la droite du boitier principal 200.

Lorsque l'ensemble de distribution 100 est fixé sur le fond 14, une portion arrière 112 du dispositif de distribution 110 est orientée en regard du fond 14, autrement dit orientée vers une direction arrière de l'ensemble de distribution 100. La direction arrière est ainsi parallèle à l'axe de profondeur A14. On définit également une direction avant comme étant une direction opposée à la direction arrière.

Le dispositif de distribution 110 présente ainsi une face de montage 114, qui est globalement orientée vers l'avant et qui est prévue pour le montage du boitier principal 200 et de chaque dispositif de protection 300.

La portion arrière 112 est réalisée en un matériau électriquement isolant, par exemple en polymère synthétique. La portion arrière 112 présente ici une forme globalement rectangulaire, qui s'étend dans sa plus grande dimension parallèlement à l'axe principal A110. Les petits côtés du rectangle sont ainsi parallèles à l'axe de hauteur H110. Le dispositif de distribution 110 comprend ici deux flasques 116, qui sont réalisés en un matériau électriquement isolant. Les deux flasques 116 sont assemblés aux petits côtés de la portion arrière 112 de manière à former un panier,

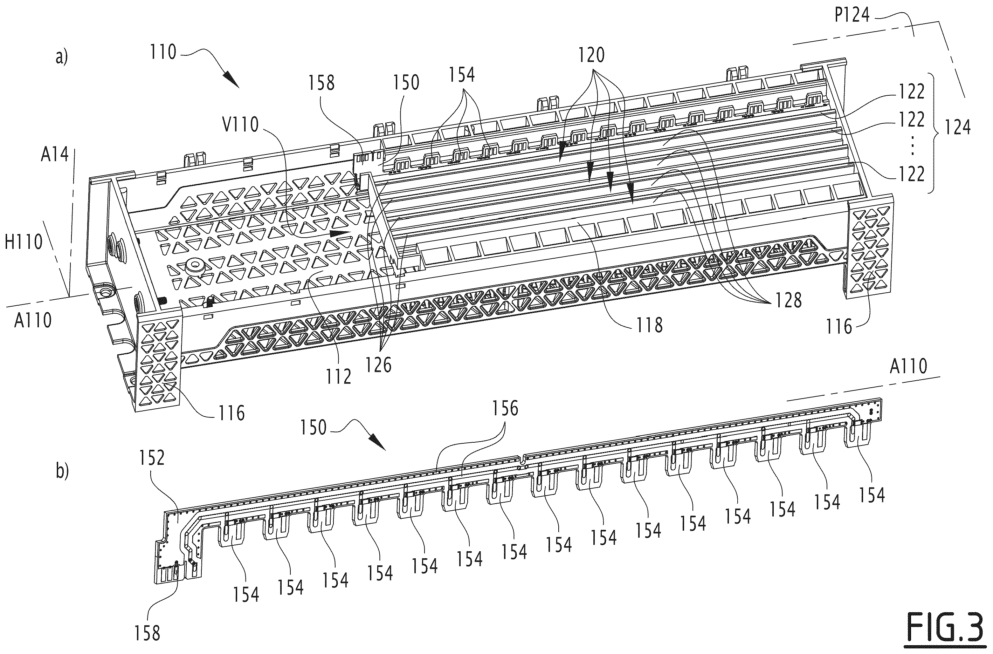

Le dispositif de distribution 110 comprend ici une paroi isolante 118, qui est réalisée en un matériau électriquement isolant et qui est assemblée à la portion arrière 112 et aux flasques 116, de manière à former une cavité V110, comme illustré à la figure 3.

Dans l'exemple illustré, le dispositif de distribution 110 comprend avantageusement un dispositif de refroidissement 400, qui est reçu dans la cavité V110 et qui est prévu pour évacuer une partie de la chaleur générée par le boitier principal 200 lorsque l'ensemble de distribution 100 est en fonctionnement. Le dispositif de refroidissement 400 est ainsi situé d'un côté arrière de la paroi isolante 118, tandis que d'un côté avant de la paroi isolante 118, le côté avant étant orienté à l'opposé du côté arrière, la paroi isolante 118 ménage des sillons 120 prévus pour recevoir plusieurs barres conductrices 122, ici quatre barres conductrices 122. Les barres conductrices 122 forment ensemble un bus de puissance 124 du dispositif de distribution 110 et, par extension, de l'ensemble de distribution 100. Le dispositif de distribution 110 est ainsi un dispositif de distribution 110 de puissance.

Les barres conductrices 122 s'étendent parallèlement entre elles selon l'axe principal A110 de l'ensemble de distribution 100 et sont alignées selon l'axe de hauteur H110. Les barres conductrices 122 définissent ensemble un plan de connexion P124, qui est un plan orthogonal à l'axe de profondeur A14, autrement dit parallèle à l'axe de hauteur H110 et à l'axe principal A110. La face de montage 114 est globalement parallèle au plan de connexion P124.

Le dispositif de refroidissement 400 comprend une plaque de contact 410, qui est prévue pour capter une partie de la chaleur dégagée par le boitier principal 200, un radiateur 420, qui est prévu pour dissiper de la chaleur dans l'air ambiant, et au moins un caloduc 430, ici trois caloducs, qui relie la plaque de contact 410 au radiateur 420 et qui est configuré pour transférer au radiateur 420 une partie de la chaleur captée par la plaque de contact 410.

La plaque de contact 410 présente ici une forme de parallélépipède et présente une face de contact 412, qui s'étend parallèlement au plan de connexion P124. La face de contact 412 est configurée pour coopérer, notamment par complémentarité de formes, avec une face arrière 230 du boitier principal 200 en configuration montée sur le dispositif de distribution 110, de manière à favoriser le transfert thermique entre la plaque de contact 410 et le boitier principal 200.

Les barres conductrices 122 incluent au moins une barre de phase et, éventuellement, une barre de neutre, la barre de neutre étant associée au neutre de la source de puissance S, chaque barre de phase étant associée à une phase respective de la source de puissance S. Dans l'exemple illustré, le bus de puissance 124 comprend quatre barres conductrices 122, la source de puissance S étant une source triphasée avec un neutre. L'ensemble de distribution 100 présente ici une configuration dite « 3P+N », ou simplement 3PN.

En variante non représentée, la source de puissance S est triphasée, avec ou sans neutre, tandis que l'ensemble de distribution ne comprend pas de barre conductrice associée au neutre. Autrement dit, l'ensemble de distribution ne comprend que trois barres de phases, chacune associée à une phase respective de la source de puissance S. L'ensemble de distribution est alors dans une configuration dite 3P.

Les principes de l'invention sont transposables quel que soit le nombre de phases de la source de puissance S. Selon une autre variante non illustrée, la source de puissance S est monophasée, c'est-à-dire ne comprend que le neutre et une seule phase. Les barres conductrices 122 incluent alors une seule barre de phase, et la barre de neutre. L'ensemble de distribution est alors dans une configuration dite P+N, ou simplement PN. Quelles que soient les configurations, on a toujours plusieurs barres conductrices 122, qui incluent au moins une barre de phase, et éventuellement une barre de neutre.

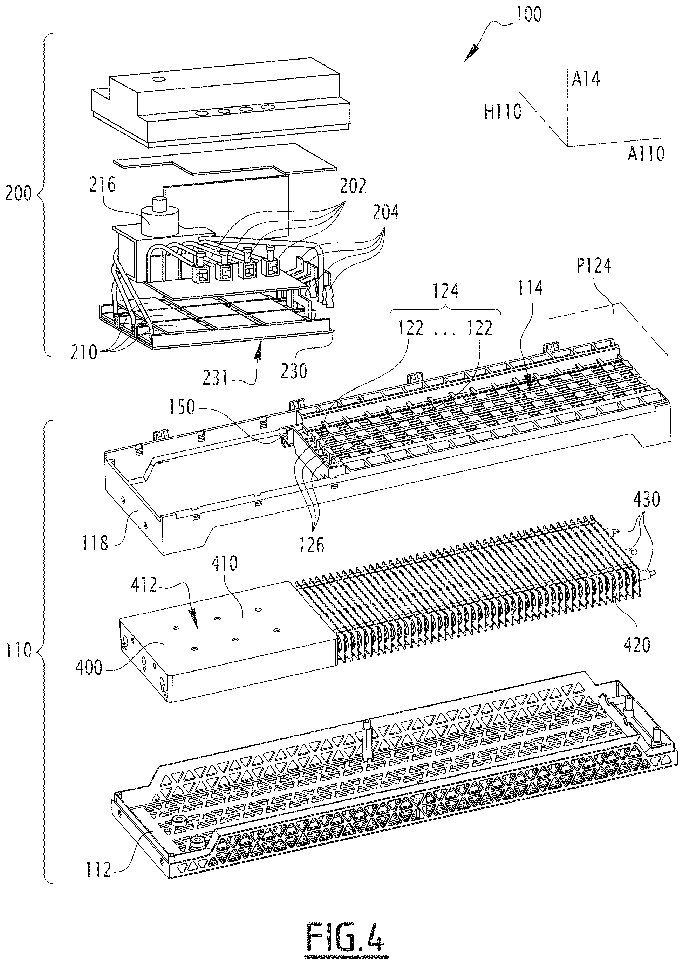

On décrit à présent le boitier principal 200, notamment en référence aux figures 4 et 5. Sur la figure 5, le circuit d'une seule phase est représenté, les trois phases étant représentées, selon une convention connue, par trois traits parallèles en travers du circuit.

Le boitier principal 200 comprend des bornes d'entrées 202, qui sont configurées pour être relié au neutre et à chaque phase de la source de puissance S, et des bornes de sorties 204, qui sont configurées pour être reliées aux barres conductrices 122, chaque borne de sortie étant associée à une barre conductrice respective et à une borne d'entrée respective. Les bornes d'entrée 202 sont ici des bornes à vis. Avantageusement, les bornes de sortie 204 sont des pinces de raccordement, qui sont chacune prévus pour la connexion réversible à une barre conductrice122 respective, selon un mouvement de connexion orienté vers l'arrière de l'ensemble de distribution 100. Ainsi, au cours du mouvement de à la connexion des bornes de sortie 204 aux barres conductrices 122, la face arrière du boitier principal 200 vient en appui contre la face de contact 412.

Pour chaque borne d'entrée 202, le boitier principal comporte une ligne d'entrée 203 correspondante, qui est reliée à la borne d'entrée 202 correspondante, et une ligne de sortie 205, qui est reliée à la borne de sortie 204 associée.

Le boitier principal 200 comprend des moyens de coupure principaux 210, qui sont commutables entre une configuration passante, dans laquelle chaque borne d'entrée 202 associée à une phase de la source de puissance S est électriquement reliée à la borne de sortie 204 associée, le boitier principal 200 étant dans une configuration passante, et une configuration de coupure, dans laquelle le passage d'un courant électrique entre la borne d'entrée 202 et la borne de sortie 204 associée est empêché, le boitier principal 200 étant dans une configuration de coupure.

Dans l'exemple préférentiel illustré, les moyens de coupure principaux 210 sont des moyens de coupures statiques, c'est-à-dire des interrupteurs de puissance base de composants semi-conducteurs, de préférence des transistors à effet de champ à grille isolée, appelés JFET ou MOSFET, et sont ainsi dits « statiques » par opposition aux moyens de coupure à contact mobile. Les moyens de coupure statiques 210 sont branchés en série entre la ligne d'entrée 203 et la ligne de sortie 205 associée. Les moyens de coupure statique 210 sont représentés schématiquement aux figures 4 et 5. En variante non représentée, les moyens de coupure principaux 210 sont des moyens de coupure électromécaniques à contacts séparables.

En fonctionnement, les moyens de coupure 210 dégagent de la chaleur, de l'ordre de quelques dizaines de Watts. Les moyens de coupure 210 sont avantageusement disposés de manière à favoriser le transfert d'au moins une partie de la chaleur dégagée vers le dispositif de refroidissement 400.

En particulier, les moyens de coupure 210 sont avantageusement agencés contre une paroi arrière 231 du boitier principal 200, de préférence en contact surfacique contre la paroi arrière 231. La paroi arrière 231 est par exemple présente lorsque le boitier principal 200 est démontable de la plaque de contact 410. La paroi arrière 231 ménage la face arrière 230, la face arrière 230 étant orientée à l'opposé des moyens de coupure 210. La paroi arrière 231 est ainsi intercalée entre les moyens de coupure 210 et la plaque de contact 410 lorsque la boitier principal 200 est monté sur le dispositif de distribution 110, de manière qu'une partie de la chaleur générée par les moyens de coupure 210 en fonctionnement est transférée à la plaque de contact 410 au travers de la paroi arrière.

Le boitier principal 200 comprend des moyens de détection principaux 212, qui sont configurés pour mesurer des grandeurs électriques aux bornes de sortie et pour détecter un défaut électrique en fonction des valeurs mesurées. Les moyens de détection principaux 212 sont ici représentés schématiquement par des boucles de mesures, qui sont ici agencés sur les lignes de sortie 205. La représentation schématique des moyens de détection principaux ne limite pas le type de défauts électriques que les moyens de détection principaux 212 sont aptes à détecter.

Le boitier principal 200 est configuré pour passer de la configuration passante à la configuration de coupure lorsque les moyens de détection principaux 212 détectent un premier défaut électrique, par exemple un défaut différentiel ou un défaut de court-circuit.

Le boitier principal 200 comprend une unité de contrôle 214, ou ECU en anglais pour *Electronic Control Unit,* qui est configurée pour piloter les moyens de coupure statiques 210, autrement dit pour faire commuter les moyens de coupure statiques 210 entre la configuration passante et la configuration de coupure. L'unité de contrôle 214 est également configurée pour analyser les valeurs mesurées par les moyens de détection principaux 212 et pour déterminer, en fonction de critères prédéfinis correspondant à un type prédéterminé de défaut électrique, la présence d'un défaut électrique du type prédéterminé. À la figure 5, l'utilisation de critères prédéfinis est représentée schématiquement par la présence d'un filtre dit « primaire » 222, le filtre primaire 222 étant intercalé entre les moyens de détection principaux 212 et l'unité de contrôle 214.

Ainsi, les moyens de détection principaux 212 sont configurés pour détecter les défauts électriques de type courts-circuits. Par exemple, les moyens de détection principaux 212 incluent des capteurs de courant, en particulier un capteur de courant par phase, tandis l'unité de contrôle 214 est configurée pour analyser les mesures réalisées par les capteurs de courant et pour détecter un court-circuit.

De préférence, les moyens de détection principaux 212 incluent aussi un dispositif de détection de courant différentiel. Il existe plusieurs types de défauts différentiels, qui sont définis notamment dans la norme IEC 60755:2017. En particulier, les types de défauts électriques incluent le fait que le signal électrique soit redressé, que le signal inclut une composante à haute fréquence, le calibre - par exemple 30 mA ou 300 mA -... On comprend que le filtre primaire 222 définit des critères de détection des défauts électriques par l'unité de contrôle 214 du boitier principal 200. De préférence, le filtre primaire 222 définit des critères de détection d'un type de défaut différentiel prédéterminé, le défaut préférentiel prédéterminé étant choisi parmi les défauts définis dans la norme IEC 60755:2017.

De préférence, le boitier principal 200 comprend aussi, pour chaque borne d'entrée 202, un dispositif de coupure générale 216, qui est un dispositif de coupure à contacts séparables, ici un sectionneur. Le dispositif de coupure générale 216 est piloté par l'unité électronique de contrôle 214 et permet déconnecter électriquement la source de puissance S de l'ensemble de distribution 100, par exemple en cas de dysfonctionnement des moyens de coupure statiques 210. Le dispositif de coupure générale 216 est intercalé chaque borne d'entrée 202 et les moyens de coupure statiques 210. De préférence, le dispositif de coupure générale 216 comprend un interrupteur monostable, c'est-à-dire que l'unité électronique de contrôle 214 doit électriser en permanence le dispositif de coupure générale 216 pour que la connexion électrique à la source de puissance soit maintenue. En variante, le dispositif de coupure générale 216 comprend un interrupteur bistable, qui est piloté par un circuit de sorte que le dispositif de coupure générale 216 s'ouvre en cas de perte d'énergie, ce qui revient à un comportement monostable. Plus généralement, le dispositif de coupure générale 216 présente un comportement d'interrupteur monostable.

Avantageusement, le dispositif de distribution 110, et par extension l'ensemble de distribution 100, comprend aussi un bus de transfert 150. Le bus de transfert 150, qui est représenté isolément à la figure 3 b), est prévu pour le fonctionnement pour alimenter en énergie chaque dispositif de protection 300 en position montée, c'est-à-dire connecté aux barres conductrices 122. Le bus de transfert 150 est donc ici un bus de transfert d'énergie, autrement dit un bus d'alimentation, qui est distinct du bus de puissance 124. Selon un exemple illustratif, le bus de transfert 150 fonctionne sous une tension de quelques dizaines de Volts, par exemple 50 V en continu, tandis que le bus de puissance 124 fonctionne sous une tension de 400 V en triphasé alternatif. Le bus de transfert 150 est ici une pièce distincte, qui est assemblée au reste du dispositif de distribution 110.

Le bus de transfert 150 comprend un corps 152, qui est réalisé en un matériau électriquement isolant, qui présente une forme allongée s'étendant le long du bus de puissance 124. Ainsi le bus de de transfert 150 s'étend le long de l'axe principal A110.

Le bus de transfert 150 définit plusieurs zones de montage 154, qui sont prévues pour être connectées à chaque dispositif de protection en position montée, les zones de montage 154 étant réparties, de préférence régulièrement, le long de l'axe principal A110 et étant chacune associée à une position unique le long de l'axe principal A110. Le bus de transfert 150 comprend préférentiellement quinze zones de montage 154, qui sont ici espacées les unes des autres d'un pas de 18 mm. D'autres pas sont bien entendu possibles. En variante non représentée, les zones de montages 154 sont espacées les unes des autres d'un pas de 9 mm.

Le bus de transfert 150 comprend au moins deux lignes de transfert 156, qui s'étendent le long du corps 152 est qui sont configurées pour être électriquement connectées à chaque dispositif de protection 300 en position montée. Les lignes de transfert 156 comprennent donc des lignes d'alimentation.

Le bus de transfert 150 comprend également une zone de connexion 158, qui est prévue pour la connexion du boitier principal 200 en position montée sur le dispositif de distribution 110. Par exemple, le boitier principal 200 comprend un bornier complémentaire 250, qui est configuré pour coopérer avec la zone de connexion 158, de sorte que le boitier principal est électriquement connecté aux lignes de transfert 156. Dans l'exemple préférentiel illustré, le boitier principal 200 prélève de l'énergie électrique nécessaire à l'alimentation du bus de transfert 150 sur le neutre et les phases de la source de puissance S, entre les moyens de coupure statique 210 et le dispositif de coupure générale 216, l'énergie électrique ainsi fournie étant à disposition des dispositifs de protection 300 pour leur fonctionnement, comme décrit plus loin. Le bornier complémentaire 250 est ici un exemple de sortie d'alimentation du boitier principal 200,

Le bus de transfert 150 est ici réalisé par une carte de circuit imprimé, les lignes de transfert 156 étant des pistes conductrices ménagées en surface de la carte, tandis que les zones de montage 154 et la zone de connexion 158 sont des pattes ménagées dans le substrat de la carte. Dans l'exemple illustré, le bus de transfert 150 intègre avantageusement un bus de communication entre le boitier principal 200 et chaque dispositif de protection 300.

On décrit à présent les dispositifs de protection 300.

Chaque dispositif de protection 300 comprend ainsi un bornier d'arrivée qui est connectable aux barres conductrices 122 de manière réversible et qui comprend au moins deux bornes d'arrivée 302, chaque borne d'arrivée 302 étant configurée pout être électriquement connectée à une barre conductrice 122 respective. Pour chaque dispositif de protection 300, les bornes d'arrivée 302 qui incluent une borne d'arrivée neutre, qui est configurée pour être électriquement connectée à la barre neutre, et entre une et trois autres bornes d'arrivée, qui sont chacune configurées pour être connectée à une barre de phase respective. Chaque dispositif de protection 300 est configuré pour être monté, de manière réversible, sur le bus de puissance 124, de sorte que chaque borne d'arrivée 302 est électriquement reliée à la barre conductrice 122 correspondante.

Chaque dispositif de protection 300 comprend aussi un bornier de départ, qui est configuré pour être connecté à une charge électrique M respective et qui comprend des bornes de départ 304, chaque borne de départ 304 étant respectivement associée à une borne d'arrivée 302 respective et étant reliée à cette borne d'arrivée 302 par un chemin de conduction 303. Les bornes de départ 304 sont représentées schématiquement à la figure 5.

Dans l'exemple non limitatif illustré, les dispositifs de protections 300 présentent des largeurs différentes, la largeur étant mesurée selon l'axe principal A110. Ainsi les dispositifs de protections 300 sont ici répartis en deux sous-groupes, qui correspondent à deux largeurs différentes, avec des dispositifs de protections 300 fins et des dispositifs de protection 300 larges, qui sont sensiblement trois fois plus larges que les dispositifs de protection 300 fins. D'autres largeurs de dispositifs de protection 300 sont bien entendu envisageables. La largeur des dispositifs de protection 300 est de préférence un multiple du pas entre chaque zone de montage 154 du bus de transfert 150, soit ici 18 mm. En variante non représentée, les dispositifs de protection 300 ont une largeur égale à un multiple de 9 mm.

Dans l'exemple illustré, un dispositif de protection 300 configuré pour alimenter une charge électrique monophasée présente avantageusement une largeur de 18 mm, tandis qu'un dispositif de protection 300 configuré pour alimenter une charge électrique triphasée présente une largeur de trois fois 18 mm, soit 54 mm.

Les dispositifs de protections 300 les plus fins sont configurés pour être connectés à deux barres conductrices 122, incluant une barre neutre et une barre de phase, tandis que les dispositifs de protections 300 les plus larges sont configurés pour être connectés à quatre barres conductrices 122. Les principes de l'invention sont applicables quel que soit le nombre de phases auxquelles sont connectés chacun des dispositifs de protection 300.

De préférence, le dispositif de distribution 110 est prévu pour recevoir cinq dispositifs de protections 300, qui comprennent chacun quatre bornes d'arrivées, autrement dit cinq dispositifs de protections 300 larges. Selon un exemple non illustré, l'ensemble de distribution 100 comprend cinq dispositifs de protections 300, qui comprennent chacun quatre bornes d'arrivées 302. En corolaire, le dispositif de distribution 110 est également prévu pour recevoir quinze dispositifs de protections 300 fins comprenant chacun deux bornes d'arrivée 302.

Les barres conductrices 122 comprennent chacune :
- une portion d'alimentation 126, qui est configurée pour être connectée à une borne de sortie 204 associée du boitier principal 200 dans une configuration montée du boitier principal, et
- une portion de connexion 128, qui s'étend d'un même côté de la portion d'alimentation 126. Les portions de connexion 128 sont géométriquement situées d'un côté avant du plan de connexion P124 et définissent ensemble une zone de connexion du bus de puissance 124.

À la figure 4, seules les portions d'alimentation 126 des barres conductrices 122 sont visibles, les portions de connexion 128 étant cachées. La zone de connexion est configurée pour recevoir au moins un dispositif de protection 300, de sorte que le dispositif de protection est relié au bus de puissance 124. Le dispositif de protection 300 est alors propre à être connecté à une charge électrique, de manière à alimenter la charge électrique en puissance électrique.

Chaque dispositif de protection 300 comprend des moyens de coupure 310, qui sont intercalés entre chaque borne d'arrivée 302 et la borne de départ 304 correspondante. Les moyens de coupure 310 sont configurés pour commuter entre une configuration armée, dans laquelle chaque borne d'arrivée est électriquement reliée à la borne de départ associée, une configuration déclenchée, dans laquelle la borne d'arrivée est électriquement isolée de la borne de départ associée. Les moyens de coupure 310 sont ici formés par un mécanisme électromécanique à contacts séparables. La configuration armée des moyens de coupure 310 correspond donc ici à une position fermée des contacts mobiles, le dispositif de protection 300 concerné étant dans une configuration fermée, tandis que la configuration déclenchée des moyens de coupure 310 correspond à une position ouverte des contacts séparables, le dispositif de protection 300 concerné étant dans une configuration ouverte. En variante non représentée, les moyens de coupure 310 du dispositif de protection 300 sont des moyens de coupure statiques.

Chaque dispositif de protection 300 comprend des moyens de détection secondaires 312, qui sont configurés pour mesurer des grandeurs électriques aux bornes de départ correspondantes et pour détecter au moins un défaut électrique d'un type prédéterminé, c'est-à-dire correspondant à des critères de détection prédéterminés. En particulier, les moyens de détection secondaires 312 sont configurés pour mesurer un courant électrique circulant dans chaque chemin de conduction 303 Les moyens de détection secondaires 312 sont ici représentés schématiquement par des boucles de mesures, qui sont ici agencés sur les chemins de conduction 303 reliant les bornes d'arrivée 302 aux bornes de départ 304. La représentation schématique des moyens de détection secondaires 312 ne limite pas le type de défauts électriques que les moyens de détection secondaires sont aptes à détecter. Ainsi, les moyens de détection secondaires 312 sont configurés pour détecter les défauts électriques de type différentiel et, optionnellement, de type courts-circuits.

Par exemple, les moyens de détection secondaires 312 incluent des capteurs de courant, en particulier un capteur de courant par phase, tandis que le dispositif de protection 300 comprend un microcontrôleur 320, qui reçoit les mesures des capteurs de courant et qui est apte à déterminer si le ou les courants mesurés dépassent un seuil de court-circuit.

Le microcontrôleur 320 est alimenté par l'intermédiaire du bus de transfert 150. À cet effet, chaque dispositif de protection 300 comprend un bornier de transfert 350, qui comprend des bornes d'alimentation 351, le bornier de transfert 350 étant configuré pour être connecté au bus de transfert 150 de sorte que chaque borne de transfert est électriquement connectée à une ligne de transfert 156 respective. Le bornier de transfert 350 est donc ici un bornier d'alimentation. Les bornes d'alimentation 351 sont différentes des bornes d'arrivée 302 ou des bornes de départ 304. Le dispositif de protection 300 comprend avantageusement une première unité d'alimentation 352, dite aussi « *Power supply unit* » ou PSU en anglais, qui est configurée pour recevoir de l'énergie électrique en provenance du bus de transfert 150, en particulier des lignes de transfert 156 dédiées à l'alimentation en énergie de fonctionnement, et pour alimenter le microcontrôleur 320 en énergie électrique de fonctionnement. Par extension, la première unité d'alimentation 352 est aussi configurée pour alimenter en énergie de fonctionnement les moyens de détection secondaires 312. L'énergie électrique de fonctionnement provient possiblement de la source de puissance.

Avantageusement, le bus de transfert 150 sert aussi au transfert des données entre chaque microcontrôleur 320 et l'unité de contrôle 214 du boitier principal 200. Par exemple, le transfert d'information passe par les mêmes lignes de transfert 156 utilisées pour le transfert d'énergie. En alternative non illustrée, le bus de transfert 150 comprend des lignes de transfert d'information spécifiques, différentes des lignes de transfert 156 servant à l'alimentation. Les lignes de transfert d'information sont préférentiellement managées sur le bus de transfert 150.

Le dispositif de protection 300 comprend avantageusement des moyens de communication 354, qui sont configurés pour la réception d'informations en provenance d'un dispositif distant du dispositif de protection 300. Dans l'exemple illustré, les moyens de communication 354 sont distincts du microcontrôleur 320. En variante non illustrée, les moyens de communication 354 sont intégrés au microcontrôleur 320.

Les moyens de communication 354 sont avantageusement configurés pour la recevoir des informations par l'intermédiaire du bornier de transfert 350 et du bus de transfert 150. Dans l'exemple préférentiel illustré, le dispositif de protection 300 est configuré pour recevoir des informations en provenance du boitier principal 200, qui constitue un premier exemple de dispositif distant. Dans l'exemple illustré, le boitier principal 200 comprend des moyens principaux de communication 254, qui sont ici représentés par une prise au format RJ45 et qui sont prévus pour qu'un utilisateur puisse configurer le boitier principal 200 et, plus généralement, l'ensemble de distribution 100. Selon un exemple avantageux d'utilisation, pour chaque type de charge électrique connectée aux bornes de départ 304, la configuration du dispositif de protection 300 est adaptée en conséquence, de manière à offrir la protection la plus adaptée contre les défauts différentiels.

En variante non illustrée, les moyens de communication 354 comprennent une prise de connexion, par exemple une prise au format RJ45, pour la réception d'informations. Dans ce cas, les informations ne transitent pas par le bus de transfert 150. Selon une autre variante non illustrée, les moyens de communications 354 et/ou les moyens principaux de communication 254 sont des moyens sans fils.

Dans l'exemple illustré, le dispositif de protection 300 comprend avantageusement un circuit de supervision 500 et une deuxième unité d'alimentation 356. Le circuit de supervision 500 est prévu pour superviser le bon fonctionnement du microcontrôleur 320. La deuxième unité d'alimentation 356 est différente de la première unité d'alimentation 352 et est prévue pour recevoir de l'énergie électrique en provenance du bus de transfert 150 et pour alimenter en énergie de fonctionnement le circuit de supervision 500.

L'utilisation de deux unités d'alimentation séparées permet d'avoir une redondance d'alimentation. En variante non illustrée, la deuxième unité d'alimentation 356 est combinée différente à la première unité d'alimentation 352 dans une unité d'alimentation redondante.

Les moyens de détection secondaires 312 incluent un dispositif de détection de courant différentiel, par exemple une boucle de mesure, configurée pour mesurer un courant différentiel. Le microcontrôleur 320 est ainsi configuré pour évaluer la mesure de courant différentiel à l'aide d'un filtre de détection 322, le filtre de détection 322 étant préalablement enregistré dans une mémoire du microcontrôleur 320 du dispositif de protection 300 et étant adapté pour la détection d'un défaut différentiel d'un premier type.

On comprend que le filtre secondaire 322 définit les critères de détection des défauts électriques détectés par le microcontrôleur 320 du dispositif de protection 300. À chaque type de défaut électrique donné correspond donc un filtre secondaire 322 spécifique. De préférence, le filtre secondaire 322 définit des critères de détection d'un type de défaut différentiel prédéterminé, qui est choisi parmi les défauts définis dans la norme IEC 60755:2017.

Chaque microcontrôleur 320 est alimenté en énergie électrique de fonctionnement par l'intermédiaire du bus de transfert 150, indépendamment de la configuration, armée ou déclenchée, des moyens de coupure 310.

Chaque dispositif de protection 300 comprend ici un actionneur 324, qui est configuré pour déplacer les moyens de coupure électromécaniques 310 dans la position ouverte lorsque l'actionneur 324 reçoit un signal de déclenchement S324. Dans le cadre de l'invention, le circuit de supervision 500 est interposé entre le microcontrôleur 320 et l'actionneur 324, le circuit de supervision 500 étant configuré pour générer le signal de déclenchement notamment lorsque le microcontrôleur 320 détecte un défaut électrique, notamment un défaut de court-circuit ou un défaut différentiel. De manière générale, le microcontrôleur 320 est configuré pour générer un signal de défaut S320 lorsque les moyens de détection secondaires 312 détectent un premier défaut électrique, le signal de défaut S320 étant reçu par le circuit de supervision 500, lequel génère le signal de déclenchement S324. Chaque dispositif de protection 300 est configuré pour passer de la configuration fermée à la configuration ouverte lorsque les moyens de détection secondaires 312 - et par extension le microcontrôleur 320 - détectent un défaut électrique.

Le microcontrôleur 320 est configuré pour générer un signal de sortie S321, qui est différent du signal de défaut S320 et qui est un signal destiné au circuit de supervision 500, le signal de sortie S321 étant un indicateur que le microcontrôleur 320 fonctionne comme attendu, en particulier que le microcontrôleur 320 est bien alimenté en énergie de fonctionnement la première unité d'alimentation 352. Le signal de sortie S321 est un signal non nul, qui est avantageusement envoyé de manière périodique ou en continu.

Dans le cadre de la présente invention, l'actionneur 324 est un actionneur bistable, c'est-à-dire que tant que l'actionneur 324 ne reçoit aucun signal de déclenchement, l'actionneur 324 ne consomme pas d'énergie électrique et ne tend pas à déplacer les moyens de coupure électromécaniques 310. Autrement dit, lorsque les moyens de coupure électromécaniques 310 sont dans la configuration fermée, tant que l'actionneur 324 ne reçoit pas le signal de déclenchement S324, les moyens de coupure électromécaniques 310 restent dans la configuration fermée, et ce sans que l'actionneur 324 ne consomme d'énergie électrique.

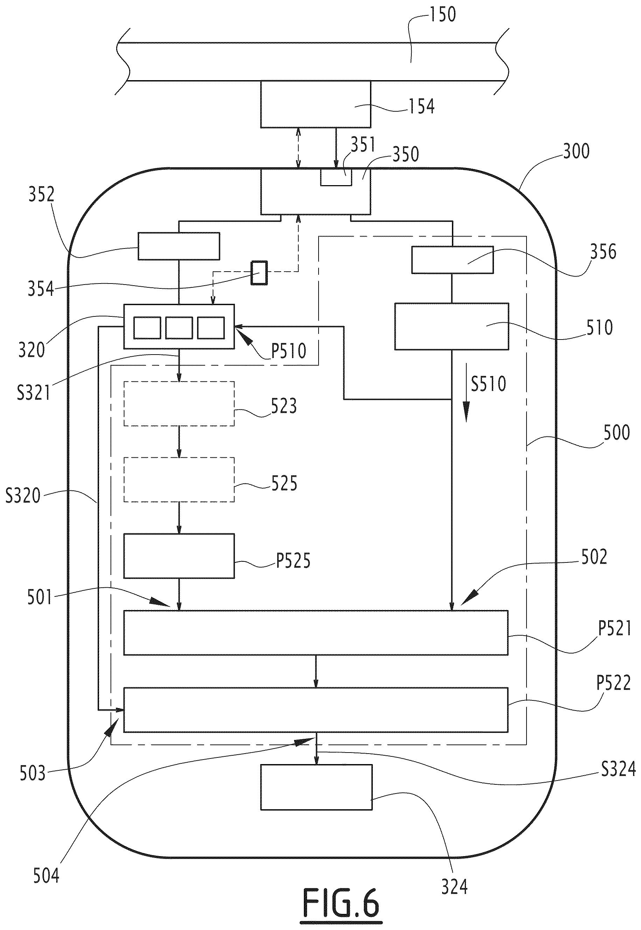

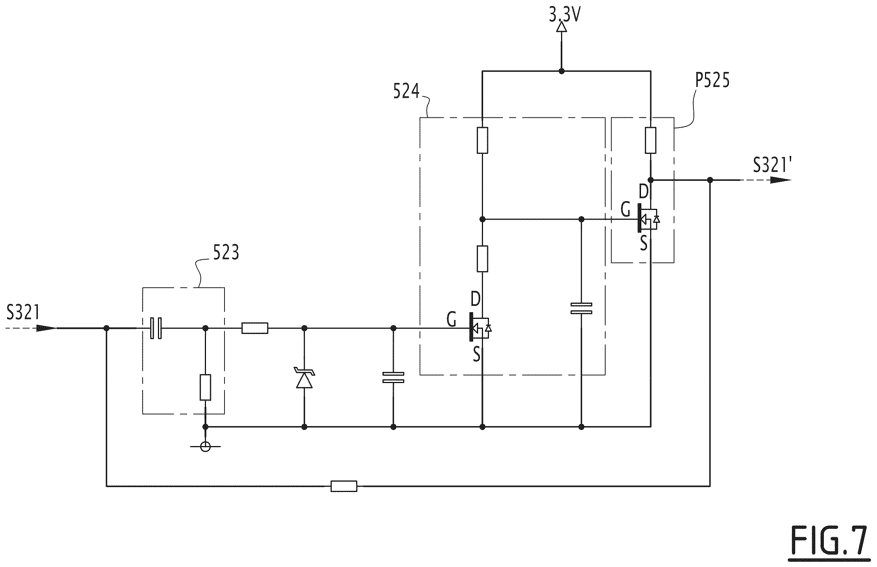

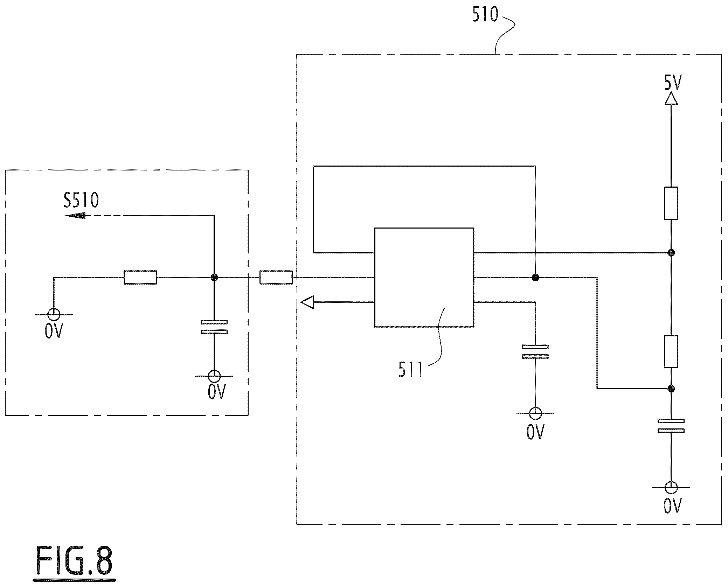

On détaille à présent le circuit de supervision 500 en référence aux figures 6 à 9.

Le circuit de supervision 500 incluant un oscillateur 510, qui est configuré pour générer un signal périodique S510 non nul. L'oscillateur 510 est ainsi alimenté en énergie électrique par l'intermédiaire de la deuxième unité d'alimentation 356. De préférence, l'oscillateur 510 est alimenté en énergie électrique exclusivement par l'intermédiaire de la deuxième unité d'alimentation 356. On comprend qu'en cas de dysfonctionnement de la deuxième unité d'alimentation 356, aucun signal périodique n'est généré. De préférence, l'oscillateur 510 est réalisé au moyen d'un circuit électronique ne comprenant que des composants passifs. Par composants passifs, on entend les composants tels que les résistances, capacités, inductances, transistors, etc., qui ne comprennent pas de microprocesseur interprétant un code de commande. On évite ainsi les risques de dysfonctionnement liés aux erreurs de codage. Plus généralement, le circuit de supervision 500 est avantageusement un circuit électronique sans logiciel. De préférence, l'oscillateur 510 est un circuit intégré 511 du type NE555 ou équivalent, qui est à la fois fiable et compact.

Le circuit de supervision 500 ménage :
- une première porte d'entrée 501, qui est une porte logique configurée pour recevoir le signal de sortie du microcontrôleur 320,
- une deuxième porte d'entrée 502, qui est une porte logique configurée pour recevoir le signal périodique de l'oscillateur 510,
- une troisième porte d'entrée 503, qui est une porte logique configurée pour recevoir le signal de défaut S320 du microcontrôleur 320, et
- une porte de sortie principale 504, qui est une porte logique reliée à l'actionneur 324.

Le circuit de supervision 500 est configuré pour générer un signal de déclenchement S324 par la porte de sortie principale 504 lorsque, alternativement :
- la première porte d'entrée 501 ne reçoit pas le signal de sortie S321 du microcontrôleur 320, ou
- la deuxième porte d'entrée 502 ne reçoit pas le signal périodique S510 de l'oscillateur 510, ou
- la troisième porte d'entrée 503 reçoit un signal de défaut S320.

Le circuit de supervision est configuré pour ne pas générer le signal de déclenchement S324 par la porte de sortie principale 504 tant que, conjointement :
- la première porte d'entrée 501 reçoit le signal de sortie S321 du microcontrôleur 320, et
- la deuxième porte d'entrée 502 reçoit le signal périodique S510 de l'oscillateur 510, et
- la troisième porte d'entrée 503 ne reçoit aucun signal de défaut S320 en provenance du microcontrôleur 320.

On comprend que lorsque la première unité d'alimentation 352 est défaillante, le microcontrôleur 320 ne génère plus le signal de sortie S321, entrainant la génération du signal de déclenchement S324 par le circuit de supervision 500. L'actionneur 324 fait ainsi passer les moyens de coupure électromécaniques 310 dans la position ouverte. Dans l'exemple illustré, l'actionneur 324 comprend deux bornes CN1 et CN2, auxquelles est relié le deuxième circuit 522. Lorsque la deuxième unité d'alimentation 356 est défaillante, l'oscillateur 510 ne génère plus le signal périodique S510, entrainant la génération du signal de déclenchement S324 par le circuit de supervision 500.

Selon un exemple avantageux de réalisation, le circuit de supervision 500 comprend un premier circuit logique 521, qui comprend la première porte d'entrée 501 et la deuxième porte d'entrée 502 et qui implémente une première porte logique P521 de type « ET ». La première porte logique P521 est aussi dite porte « AND » en anglais. La première porte logique P521 combine le signal de sortie S321 du microcontrôleur 320 avec le signal périodique S510 de l'oscillateur 510, de manière à générer un signal de contrôle S521.

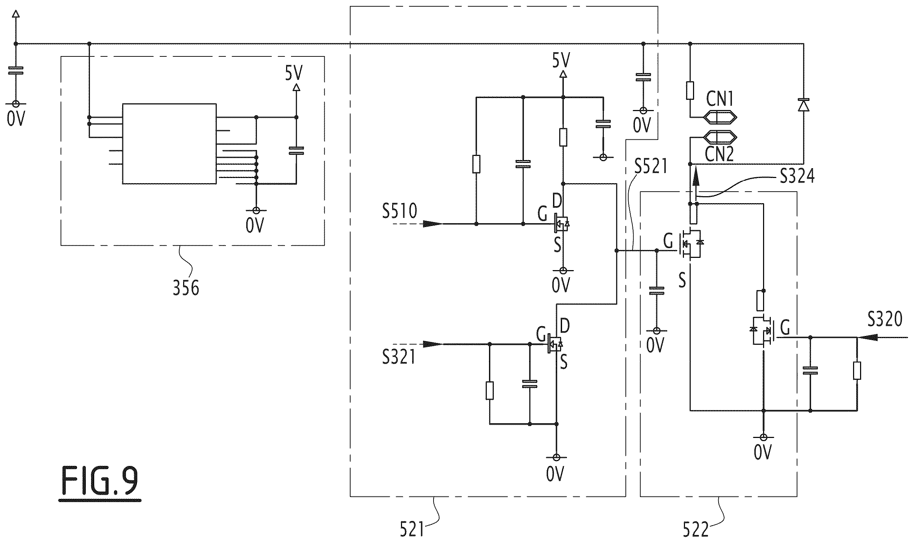

Un exemple de réalisation du premier circuit logique 521 est représenté en figure 9. D'autres agencements des composants, voire d'autres circuits équivalents, sont bien entendu possibles pour implémenter la première porte logique P521 de type « ET ».

Le circuit de supervision 500 comprend un deuxième circuit logique 522, qui ménage la troisième entrée logique 503 et la porte de sortie principale 504. Le deuxième circuit logique 522 implémente une deuxième porte logique de type « OU » et référencée P522, la deuxième porte logique OU P522 combinant le signal de contrôle S521 de la première porte logique ET P521 avec le signal de défaut S320 du microcontrôleur 320, de manière à générer le signal de déclenchement S324, qui est transmis de la porte de sortie principale 504 à l'actionneur 324 de manière à faire commuter l'actionneur 324. Avantageusement, le deuxième circuit logique 522 est alimenté par une source d'énergie indépendante de la première unité d'alimentation 352 et de la deuxième unité d'alimentation 356. Par exemple, le deuxième circuit logique 522 est connecté aux bornes d'alimentation 351.

De manière similaire, le premier circuit logique 521 est avantageusement alimenté par une source d'énergie indépendante de la première unité d'alimentation 352 et de la deuxième unité d'alimentation 356. Par exemple, le premier circuit logique 521 est connecté aux bornes d'alimentation 351.

Le signal de sortie S321 est configuré pour neutraliser le signal périodique S510, de sorte que :
- lorsque l'oscillateur 510 génère le signal périodique S510 et que, conjointement, le microcontrôleur 320 génère le signal de sortie S321, alors le signal de contrôle S521 généré par la première porte logique P521 est un signal de maintien qui, en l'absence de signal de défaut S320, tend à laisser l'actionneur 324 en position fermée après combinaison par la deuxième porte logique P522,
- lorsque le microcontrôleur 320 ne génère plus le signal de sortie S320, le signal de contrôle S521 est un signal de déclenchement. Plus précisément, en l'absence du signal de sortie S321, le signal de contrôle S521 généré par la première porte logique ET P521 devient, après passage dans la deuxième porte logique OU P522, un signal de déclenchement S324.

Dit autrement, le signal de sortie S321 est configuré pour neutraliser le signal périodique S510 au passage de la première porte logique P521, de sorte que :
- lorsque l'oscillateur 510 génère le signal périodique S510 et, conjointement, le microcontrôleur 320 génère le signal de sortie S321, alors le signal de contrôle S521 généré par la première porte logique ET P521 est un signal de maintien, qui tend à laisser l'actionneur 324 en position fermée une fois le signal de contrôle S521 reçu par la deuxième porte logique OU P522 et en l'absence de signal de défaut S320,
- lorsque le microcontrôleur 320 ne génère plus le signal de sortie S320, le signal de contrôle S521 est un signal de déclenchement.

De manière générale, schématiquement, on comprend que si le signal périodique S510 et le signal de sortie S321 sont de même signe, il est nécessaire d'inverser un signal pour que, à la suite de la première porte logique P521 ET, le signal de contrôle S521 soit un signal nul. Plus généralement, en fonction des caractéristiques du signal de sortie S321 telles que le voltage, la fréquence, etc., il est nécessaire de traiter ce signal de sortie S321 afin qu'il neutralise effectivement le signal périodique S510.

Dans l'exemple illustré, le signal de sortie S321 est avantageusement traité successivement par un filtre passe-haut 523, puis par un circuit de démodulation 524. Dans l'exemple illustré le signal de sortie est également inversé par un circuit implémentant une porte logique P525 de type « NON », dite aussi porte « NOT » en anglais, de manière à adapter le signal de sortie S321 à la porte logique ET P521 et à neutraliser le signal périodique S510 au niveau de la porte logique ET P521. Le signal de sortie, initialement généré par le microcontrôleur 320 et ainsi traité est référencé S321'.

Selon une variante non illustrée, le signal périodique S510 est également traité avant de parvenir à la première porte logique ET P521. Selon une autre variante non illustrée, le signal de sortie et le signal périodique sont chacun traités, par des circuits électroniques respectifs, avant d'atteindre la première porte logique ET. Selon une autre variante encore, aucun traitement du signal de sortie n'est nécessaire, le microcontrôleur 320 étant configuré pour générer directement un signal de sortie S320 apte à neutraliser le signal périodique S510.

Avantageusement, le microcontrôleur 320 comprend une entrée de réception P510 du signal périodique S510 de l'oscillateur 510, le microcontrôleur 320 tant configuré pour générer le signal de défaut S320 lorsque le signal périodique S510 diffère d'un signal périodique nominal prédéterminé. Ainsi, de la même façon que le circuit de supervision 500 vérifie que le microcontrôleur 320 fonctionne correctement, le microcontrôleur 320 vérifie que l'oscillateur 510 fonctionne correctement, sans que cette supervision ne passe par la première porte logique ET P521.

Les modes de réalisation et les variantes mentionnées ci-dessus peuvent être combinés entre eux pour générer de nouveaux modes de réalisation de l'invention.

## Revendications

1. Dispositif de protection (300) électrique, configuré pour relier électriquement une charge électrique (M) à une source de puissance (S) électrique, le dispositif de protection (300) comprenant :
- au moins deux bornes d'arrivée (302), qui sont configurées pour être électriquement connectées à une phase de la source de puissance (S) et éventuellement à un neutre de la source de puissance (S),
- des bornes de départ (304), qui sont configurées pour être reliées à la charge électrique (M), chaque borne de départ (304) étant associée à une borne d'arrivée (302) respective,
- des bornes d'alimentation (351), qui sont différentes des bornes d'arrivée (302)s et qui sont configurées pour être connectées à un bus d'alimentation (150) en énergie électrique de fonctionnement, l'énergie électrique de fonctionnement provenant possiblement de la source de puissance (S),
- des moyens de coupure (310) électromécaniques comprenant des contacts séparables, qui sont déplaçables, au moyen d'un actionneur (324), entre une position fermée, dans laquelle chaque borne d'arrivée (302) est électriquement reliée à la borne de départ (304) associée, le dispositif de protection (300) étant dans une configuration fermée, et une position ouverte, dans laquelle le passage d'un courant électrique entre la borne d'arrivée (302) et la borne de départ (304) associée est empêché, le dispositif de protection (300) étant dans une configuration ouverte, l'actionneur (324) étant configuré pour faire passer les moyens de coupure (310) électromécanique de la position fermée à la position ouverte lorsque l'actionneur reçoit un signal de déclenchement,
- des moyens de détection (312), qui sont configurés pour mesurer des grandeurs électriques aux bornes de départ (304) et pour détecter au moins un défaut électrique,
- un microcontrôleur (320), qui est configuré pour générer un signal de défaut (S320) lorsque les moyens de détection (312) détectent un premier défaut électrique,
- une première unité d'alimentation (352), qui est configurée pour recevoir de l'énergie électrique en provenance du bus d'alimentation (150) et pour alimenter le microcontrôleur (320) en énergie électrique de fonctionnement,
dans lequel :
- l'actionneur (324) est un actionneur bistable,
- le dispositif de protection (300) comprend :
• un circuit de supervision (500), qui est interposé entre le microcontrôleur (320) et l'actionneur (324), le circuit de supervision (500) incluant un oscillateur (510) configuré pour générer un signal périodique (S510), et
• une deuxième unité d'alimentation (356), qui est différente de la première unité d'alimentation (352) et qui est configurée pour recevoir de l'énergie électrique en provenance du bus d'alimentation (150) et pour alimenter le circuit de supervision (500) en énergie électrique,
- le microcontrôleur (320) est configuré pour générer un signal de sortie (S321), qui est différent du signal de défaut (S320),
- le circuit de supervision (500) ménage :
• une première porte d'entrée (501), qui est une porte logique configurée pour recevoir le signal de sortie (S321) du microcontrôleur (320),
• une deuxième porte d'entrée (502), qui est une porte logique configurée pour recevoir le signal périodique (S510) de l'oscillateur (510),
• une troisième porte d'entrée (502), qui est une porte logique configurée pour recevoir le signal de défaut (S320) du microcontrôleur (320),
• une porte de sortie principale (504), qui est une porte logique reliée à l'actionneur (324),
- le circuit de supervision (500) étant configuré pour générer un signal de déclenchement (S324) par la porte de sortie principale (504) lorsque, alternativement :
• la première porte d'entrée (501) ne reçoit pas le signal de sortie (S321) du microcontrôleur (320), ou
• la deuxième porte d'entrée (502) ne reçoit pas le signal périodique (S510) de l'oscillateur (510), ou
• la troisième porte d'entrée (502) reçoit un signal de défaut (S320).
- le circuit de supervision (500) est configuré pour ne pas générer le signal de déclenchement (S324) par la porte de sortie principale (504) tant que, conjointement :
• la première porte d'entrée (501) reçoit le signal de sortie (S321) du microcontrôleur (320), et
• la deuxième porte d'entrée (502) reçoit le signal périodique (S510) de l'oscillateur (510), et
• la troisième porte d'entrée (502) ne reçoit aucun signal de défaut (S320).

2. Dispositif de protection (300) selon la revendication 1, dans lequel le circuit de supervision (500) comprend :
• un premier circuit logique (521), qui ménage la première porte d'entrée (501) et la deuxième porte d'entrée (502) et qui implémente une porte logique ET, la porte logique ET combinant le signal de sortie (S321) du microcontrôleur (320) avec le signal périodique (S510) de l'oscillateur (510), de manière à générer un signal de contrôle (S521),
• un deuxième circuit logique, qui ménage la troisième entrée logique et la porte de sortie principale (504), le deuxième circuit logique implémentant une porte logique OU, la porte logique OU combinant le signal de contrôle (S521) (S521) de la porte logique ET avec le signal de défaut (S320) du microcontrôleur (320), de manière à générer le signal de déclenchement (S324), qui est transmis de la porte de sortie principale (504) à l'actionneur (324) de manière à faire commuter l'actionneur (324),
dans lequel :
- le signal de sortie (S321) est configuré pour neutraliser le signal périodique (S510), de sorte que :
• lorsque l'oscillateur (510) génère le signal périodique (S510) et, conjointement, le microcontrôleur (320) génère le signal de sortie (S321), alors le signal de contrôle (S521) est un signal de maintien, adapté pour laisser l'actionneur (324) en position fermée,
• lorsque le microcontrôleur (320) ne génère plus le signal de sortie (S321), le signal de contrôle (S521) est un signal de déclenchement (S324).

3. Dispositif de protection (300) selon l'une quelconque des revendications 1 ou 2, dans lequel :
- le microcontrôleur (320) comprend une entrée de réception (P510) du signal périodique (S510) de l'oscillateur (510), le microcontrôleur (320) étant configuré pour, lorsque le signal périodique (S510) n'est pas détecté pendant un intervalle de temps prédéterminé, générer le signal de défaut (S320).

4. Dispositif de protection (300) selon l'une quelconque des revendications 1 à 3, dans lequel le circuit de supervision (500) est réalisé par un circuit électronique sans logiciel.

5. Dispositif de protection (300) selon l'une quelconque des revendications 1 à 4, dans lequel l'oscillateur (510) est un circuit intégré NE555 ou équivalent.

6. Ensemble de distribution (100), configuré pour distribuer de l'énergie électrique provenant de la source de puissance (S) à au moins une charge électrique (M), dans lequel l'Ensemble de distribution (100) comprend un dispositif de distribution (110), qui comprend :
- un bus de puissance (124), qui comprend plusieurs barres conductrices (122) :
• qui incluent au moins une barre de phase et éventuellement une barre de neutre, la barre de neutre éventuelle étant associée au neutre de la source de puissance (S), chaque barre de phase étant respectivement associée à une phase de la source de puissance (S),
• qui s'étendent s'étendant parallèlement entre elles selon un axe principal (A110) du dispositif de distribution (110) et qui sont alignées selon un axe de hauteur (H110) qui est orthogonal à l'axe principal (A110),
- un bus d'alimentation (150), qui est distinct du bus de puissance (124),
l'ensemble de distribution (100) comprend également un exemplaire du dispositif de protection (300) selon l'une quelconque des revendications 1 à 5, le dispositif de protection (300) étant monté au reste du dispositif de distribution (110) de sorte que :
- chaque borne d'arrivée (302) est électriquement connectée à une barre conductrice (122) correspondante,
- la première unité d'alimentation (352) et la deuxième unité d'alimentation (356) sont électriquement connectées au bus d'alimentation (150).

7. Ensemble de distribution (100) selon la revendication 6, dans lequel :
- l'ensemble de de distribution inclut, en outre, un boitier principal (200), qui comprend :
• des bornes d'entrées (202), qui sont configurées pour être relié à chaque phase et au éventuellement au neutre de la source de puissance (S),
• des bornes de sorties (204), qui sont chacune reliées à la barre conductrice, de neutre ou de phase, correspondante, chaque borne de sortie étant associée à une barre conductrice (122) respective et à une borne d'entrée (202) respective,
• une sortie d'alimentation (250), qui est connectée au bus d'alimentation (150), le boitier principal étant configuré pour fournir de l'énergie électrique de fonctionnement à chaque dispositif de coupure par l'intermédiaire du bus d'alimentation (150).

8. Ensemble de distribution (100) selon la revendication 7, dans lequel :
- le boitier principal comprend un dispositif de coupure générale (216), qui est configurée pour, conjointement :
• déconnecter électriquement chaque borne de sortie (204) de la borne d'entrée (202) correspondante, et
• déconnecter électriquement la sortie d'alimentation (250) de la source de puissance (S).

9. Ensemble de distribution (100) selon la revendication 8, dans lequel :
- le dispositif de coupure générale (216) présente un comportement d'interrupteur monostable.

10. Tableau électrique (10), comprenant :
- un coffre (12), délimitant une enceinte (V12) et présentant un fond (14),
- l'ensemble de distribution (100) selon l'une quelconque des revendications 6 à 9,
dans lequel l'ensemble de distribution (100) est fixé sur le fond du boitier.
